# EUROPEAN PATENT APPLICATION

(11) **EP 1 341 362 A2**
(43) Date of publication of application: **03.09.2003**
(21) Application number: 03251105.7
(22) Date of filing: 25.02.2003
(51) Int. Cl.: H04M 1/60, A42B 3/30, H04B 1/38

(54) **Hands free audio kit for helmet wearers**

(30) Priority: 27.02.2002 GB 0204581
(71) Applicant: Hosiden Besson Limited, Hove, East Susseex BN3 7EZ (GB)
(72) Inventor: Parmley, Charles Richard Colin, Tonbridge, Kent TN10 4HB (GB); Jupp, Stephen David John, Eastbourne, East Sussex BN22 8SY (GB)
(74) Representative: Townsend, Victoria Jayne

(57) **Abstract**

A hands free audio kit for use with a mobile telephone can conveniently be worn with a motorcycle or other safety helmet. The kit comprises an exciter capsule (1), a microphone (2) and a control unit (3), the control unit comprising a half-duplex speech circuit, an audio amplifier and means for connection with a power supply, means for mounting the capsule (1) on the shell of the helmet, means for mounting the microphone (2) inside or on the helmet adjacent the wearer's mouth and means for connecting the kit with the audio output of a mobile telephone and/or other audio device.

## Description

This invention relates to a hands free audio kit for a mobile telephone, games player, music player or the like. In particular, the invention relates to such a kit which can be conveniently and comfortably worn with a helmet. The helmet may be worn for vehicle safety or as a games player peripheral to improve the reality of the games playing experience.

Headphone sets are well known and are commonly used as a hands free solution for travellers wishing to listen privately to music or to have a telephone conversation on their mobile phone. It is also known to have safety helmets incorporating radio communications equipment, such helmets, however include audio speakers positioned over the wearer's ears.

The present invention aims to provide a hands free audio kit which can provide good quality sound for a helmet wearer whilst maintaining a high standard of comfort. A further aim is to provide a kit which can be conveniently incorporated into an existing helmet and transferred between helmets with little inconvenience to the user.

In accordance with the present invention there is provided a hands free audio kit comprising;
an exciter capsule, a microphone and a control unit, the control unit comprising a half duplex speech circuit, an audio amplifier and means for connection with a power supply, means for mounting the exciter capsule on the shell of the helmet, means for mounting the microphone inside or on the helmet adjacent a wearer's mouth and means for connecting with the audio output of an audio device such as a mobile telephone.

The audio device is typically a mobile telephone but may be alternatively or in addition, any other portable audio device, for example, but not strictly limited to a games player, a radio or a music player such as an MP3 or personal stereo.

The exciter capsule comprises a small electromechanical transducer encapsulated in a protective housing. The housing may, or may not completely encase the transducer. The configuration of the exciter capsule is such that, when placed on a resonant surface, vibrations generated in the transducer can be transmitted to the resonant surface, the exciter capsule and resonant surface together acting as an audio speaker system. The electromechanical transducer may be of any known type, some suitable examples including electromagnetic, dynamic, bender or piezo-ceramic type transducers.

Prior art arrangements require the fitting of individual ear pieces in or over a wearer's ear. This can cause discomfort to a helmet wearer, whose helmet is typically designed to fit very tightly against the head and ears. There is also a question of possible damage to the ear caused by an earpiece where the helmet wearer to be subject to an impact to the side of the head, near the ear. In the arrangement according to the present invention, the shell of the helmet, when caused to resonate by the exciter capsule substitutes for earpieces and transmits sound around the head of the helmet wearer which is picked up by the ears. This may not only be more safe than cumbersome and uncomfortable receiver/speaker arrangements as used in the acknowledged prior art but will provide a better quality, "surround sound" effect for the wearer.

Conveniently the means for attaching the exciter capsule to the resonant surface are provided on an outer surface of the housing of the exciter capsule. Suitable means include but are not strictly limited to; peelable adhesives, clips, bayonets, screws, Velcro (RTM), magnetism or suction.

The microphone may be of any known form of sufficiently small scale so as to be incorporatable into a helmet without compromising safety or comfort for the wearer. Suitable scale will, understandably, vary with the shape and design of helmet with which the kit is to be worn. Suitable means for mounting the microphone inside or on the helmet include but are not strictly limited to; peelable adhesives, clips, bayonets, screws, Velcro (RTM), magnetism or suction. Where the helmet has a solid chin piece, it is preferred the microphone is mounted inside the helmet, behind the chin piece. Where there is no solid chin piece or a chin strap, the microphone may, desirably be mounted to an outer edge of the helmet, the mounting means including a limb for positioning the microphone adjacent the helmet wearer's mouth.

The means for connection with a power supply may conveniently comprise a circuit powered by battery cells. Optionally, the battery cells may be rechargeable. The control unit may further comprise a charging circuit for storing power from a supply. The charge unit may be configured to be fitted into the helmet in close proximity with the exciter capsule or microphone. Alternatively, the control unit may be carried outside the helmet, in line with the audio device for which the kit is to be used. Where the charge unit is mountable in the helmet, it is desirably provided with a jack socket whereby an electrical connection can easily be made or broken with the audio device for which the kit is to be used. This enables the user to easily remove and replace his helmet without becoming entangled in cable.

The half-duplex speech circuit allows the two way transmission of audio between the kit wearer and his audio device, but only in one direction at a time. For example, if the kit wearer is speaking on a mobile telephone and the party on the other end of the call speaks at the same time, only the louder of the two will be transmitted. This avoids interference of signals and confusion for wearers of the kit.

The kit may be adapted so as to be connectable with a vehicle cigar lighter plug as a power supply. In another alternative, the kit may be adapted to draw power directly from a power source which powers the audio device for which the kit is to be used.

The invention need not require adaptation of existing helmets in order for some embodiments of the invention to be fitted but optionally may be adapted by the reshaping of the impact absorbing surface adjacent the head to accommodate the microphone, capsule and, optionally the control unit.

It will be appreciated that, in some applications, there is no need for a microphone as the helmet wearer may simply want to listen to the audio output of a game or other transmit only audio device such as a music player. Hence, in another aspect, the invention provides a hands free audio kit comprising;
an exciter capsule, and a control unit, the control unit comprising an audio amplifier and means for connection with a power supply, means for mounting the exciter capsule on the shell of the helmet and means for connecting with the audio output of an audio device.

In the particular case of games players, the kit may be permanently fixed into the helmet which may, optionally, also incorporate a visual display. It will be appreciated that many of the optional features proposed for use in configuration with the first aspect would be equally applicable to this aspect of the invention.

For the purposes of exemplification, some embodiments of the invention will now be further described with reference to the following Figures in which:
Figure 1 shows a first embodiment of the invention in combination with a helmet and suitable for use with a mobile telephone;
Figure 2 shows a second first embodiment of the invention in combination with a helmet and suitable for use with a mobile telephone;
Figure 3 shows a third embodiment of the invention in combination with a helmet and suitable for use with one way audio systems such as music players or games systems;
Figure 4 shows an exploded view of an exciter capsule suitable for use in accordance with a hands free kit of the invention.

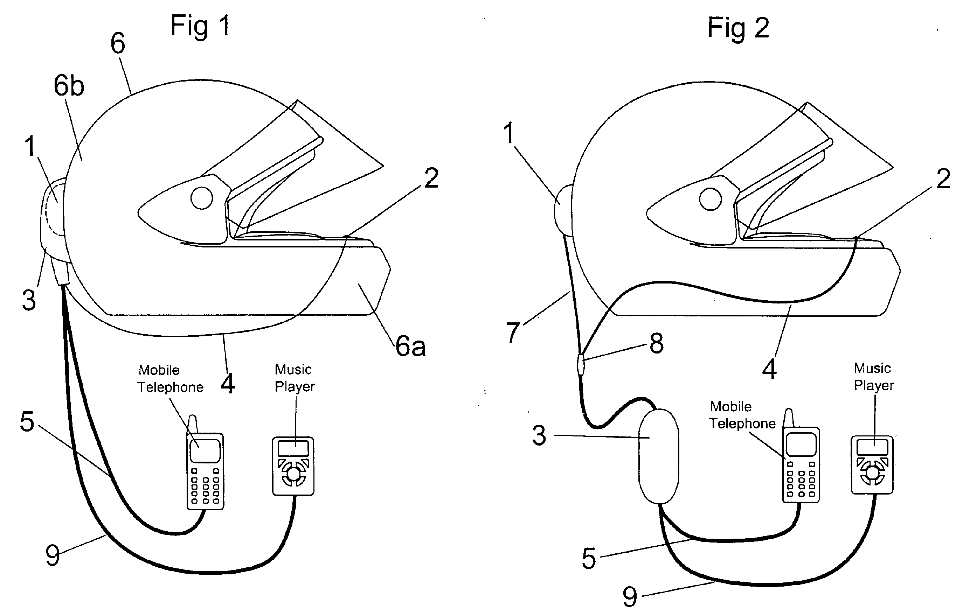

As can be seem from Figure 1 a kit of the invention comprises an exciter capsule (1), a microphone unit (2) and a control unit 3. In the embodiment of Figure 1 the control unit (3) and exciter capsule (1) are encased in the same housing. The exciter capsule (1) and control unit (3) are electrically connected to microphone (2) by cable (4) extending from control unit (3) is a second cable (5) which terminates in a jack plug configured to fit with the audio output of a mobile telephone. Cable (9) also terminates in a jack plug configured to fit with the audio output of a music player or the like. As can be seen the exciter capsule (1) is mounted directly on the shell of a motorcycle helmet (6). The microphone is mounted to the rear of a chin piece (6a) of the helmet and the combined exciter capsule (1) and control unit (3) is mounted to the rear of the main body of the helmet (6b).

In Figure 2 a similar embodiment is shown, however, in this embodiment the control unit (3) is positioned in line with a mobile telephone, music player or the like. An additional cable (7) connects between the exciter capsule (1) and the control unit (3). Cables (7) and (4) are brought together via an in-line socket (8) from which the combined cable extends and is connected with control unit (3).

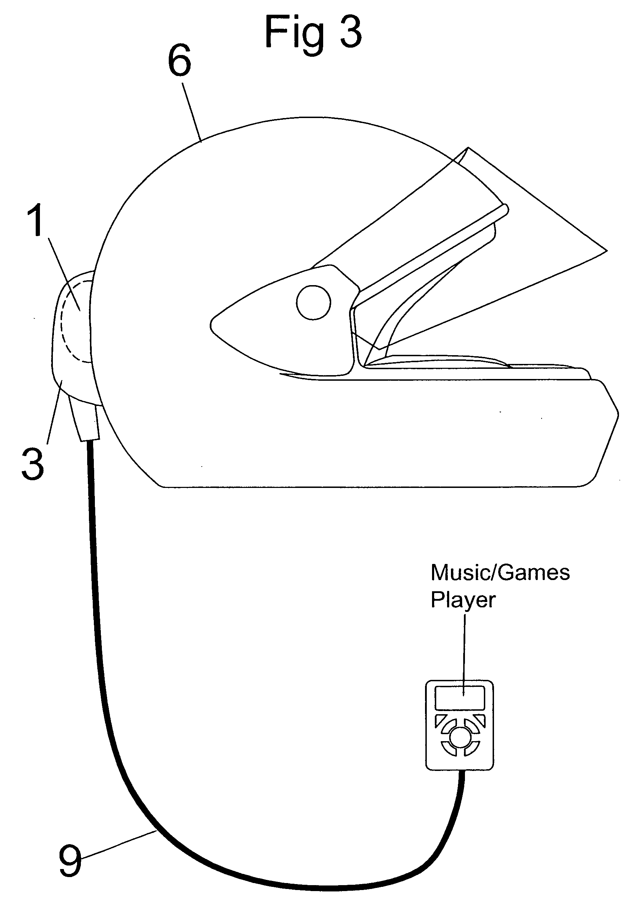

In Figure 3 an arrangement suitable for one way audio, for example a music player or a games player is shown. The arrangement is substantially the same as the arrangement for Figure 1 but does not incorporate a microphone. Also the control unit may not necessarily incorporate a half duplex speech circuit.

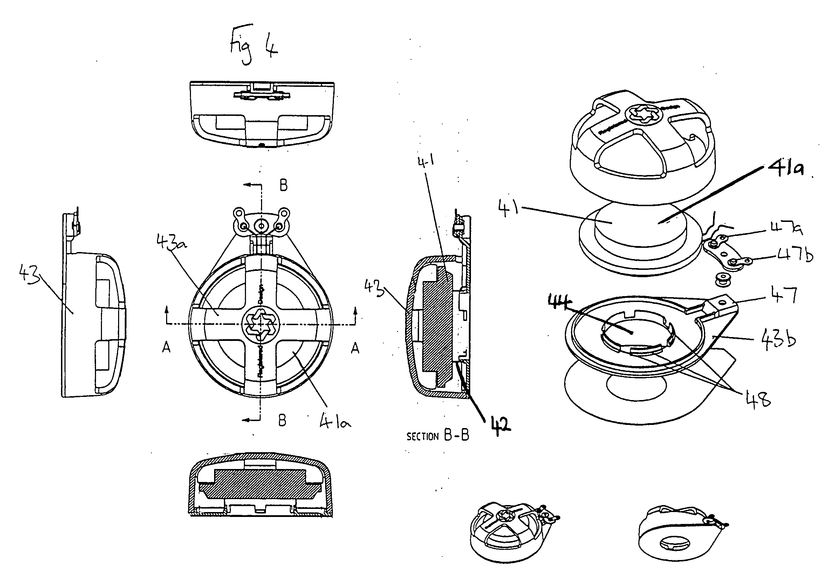

As shown in Figure 4 a transducer comprises a magnet assembly (41) and a voice coil ring (42) carried in a robust lightweight plastic housing (43). The magnet assembly (41) is suspended in the housing (43) with a small clearance around its perimeter and to its front surface (41a) to allow for vibration within the plastic housing (43). The housing has a top face (43a) of substantially cruciform shape having four substantial spaces to reduce the weight of the plastic housing. The base of the housing (43b) is provided with an electrical connector tab (47) with connectors (47a) and (47b) to which electrical wiring (not shown) can be attached. The voice coil ring (42) is seated in supporting structure (48) which is provided around the periphery of the aperture (44) in the base (43b).

It is to be understood that the foregoing represents just some of the embodiments of the invention and other embodiments will no doubt occur to the skilled artisan without departing from the true scope of the invention as claimed in the appended claims.

## Claims

1. A hands free audio kit for use in combination with a helmet comprising:
an exciter capsule (1), a microphone (2) and a control unit (3), the control unit comprising a half duplex speech circuit, an audio amplifier and means for connection with a power supply, means for mounting the exciter capsule (1) on the shell of the helmet (6), means for mounting the microphone (2) inside or on the helmet adjacent a wearer's mouth and means (5) for connecting with the audio output of an audio device.

2. A hands free audio kit comprising an exciter capsule (1) and a control unit (3), the control unit comprising an audio amplifier and a means for connection with a power supply, means for mounting the exciter capsule (1) on the shell of a helmet (6) and means for connecting with the audio output of an audio device.

3. A hands free audio kit as claimed in claim 1 or claim 2 wherein the exciter capsule (1) comprises an electromechanical transducer selected from electromagnetic, dynamic, bender or piezo ceramic type transducers.

4. A hands free audio kit as claimed in any preceding claims wherein the means for attaching the exciter capsule (1) to the resident surface is selected from peelable adhesives, clips, bayonets, screws, Velcro^{(RTM)}, magnetism or suction.

5. A hands free audio kit as claimed in claim 1 wherein the means for mounting the microphone as selected from peelable adhesives, clips, bayonets, screws, Velcro^{(RTM)}, magnetism or suction.

6. A hands free audio kit as claimed in claim 5 wherein the microphone (2) is attached to an outer surface of the helmet and the mounting means includes a limb for positioning the microphone adjacent the helmet wearer's mouth.

7. A hands free audio kit as claimed in any preceding claim wherein the means for connection with a power supply comprises a circuit powered by battery cells.

8. A hands free audio kit as claimed in any preceding claim wherein the control unit (3) further comprises a charging circuit for storing power from a power supply.

9. A hands free audio kit as claimed in any preceding claim wherein the control unit (3) is configured to be fitted to the helmet (6) in close proximity with the exciter capsule (1) and/or the microphone (2).

10. A hands free audio kit as claimed in any one of claims 1 to 7 wherein the control unit (3) is configured to be electrically connected with the exciter capsule (1) but carried remotely of the helmet (6).
